# EUROPÄISCHE PATENTSCHRIFT

(11) **EP 0 488 933 B1**
(45) Veröffentlichungstag und Bekanntmachung des Hinweises auf die Patenterteilung: **19.06.1996**
(21) Anmeldenummer: 91710045.5
(22) Anmeldetag: 18.11.1991
(51) Int. Cl.: C09B 67/00

(54) **Verfahren zur Herstellung von verbesserten Farbstoffgranulaten**
Method for producing improved dyestuff granulates
Procédé pour la fabrication de granulés améliorés de colorants

(30) Priorität: 29.11.1990 DE 4038002
(43) Veröffentlichungstag der Anmeldung: 03.06.1992
(73) Patentinhaber: BAYER AG, 51368 Leverkusen (DE)
(72) Erfinder: Kaspar, Vaclav, Dipl.-Ing., W-5000 Köln 80 (DE); Brandt, Horst, Dr., W-5068 Odenthal (DE); Popp, Gottfried, Dr., W-5090 Leverkusen (DE)

(56) Entgegenhaltungen:
- EP-A- 0 101 087
- DE-A- 2 657 994
- GB-A- 2 158 084
- US-A- 3 843 380

## Beschreibung

Gegenstand der Erfindung ist ein Verfahren zur Herstellung von Farbstoffpräparaten in Granulatform.

Es sind Verfahren bekannt, bei denen man Kunststoff-Farbstoffe im Vakuumschrank oder Schaufeltrockner trocknet. Bei diesen Verfahren müssen die Farbstoffteilchen in der Mühle gemahlen werden. Dabei entsteht sehr viel Staub und es kommt dadurch naturgemäß zu Verlusten. Um eine Staubbelästigung der Bedienung zu vermeiden, muß stark abgesaugt werden.

Verfahren zur Herstellung von Farbstoffpräparaten in Granulat- oder Pulverform sind bekannt, bei denen man Dispersionen oder bevorzugt Lösungen von Farbstoffen und gegebenenfalls Weichmachern, Tensiden sowie anderen Hilfsmitteln in Schmelzen von in Wasser unlöslichen bzw. schwer löslichen Wachsen und/oder Harzen versprüht.

Nachteilig an den bekannten Verfahren ist die Staubbelästigung bzw. die zu ihrer Vermeidung eingesetzten hohen Konzentrationen an Tensiden, Dispergierhilfsmitteln und anderen Zusätzen.

Der Erfindung lag die Aufgabe zugrunde, ein verbessertes Verfahren zur Herstellung rieselfähiger, staubarmer Granulate zur Verfügung zu stellen mit einem geringen Zusatz von Hilfstoffen möglichst unter 5 %.

Aus US-A-38 43 380 sind Pigmentpräparationen bekannt, die neben einem mineralischen Pigment einen Verdicker und gegebenenfalls ein oberflächenaktives Mittel enthalten, wobei für die Verwendung in Kunststoffen der Verdicker insbesondere ein Polyethylenglykol mit einem Molekulargewicht von 100.000 bis 900.000 ist. Als oberflächenaktives Mittel werden insbesondere Polyglykole mit einem Molekulargewicht von 500 bis 7.000 beschrieben.

In dem GB-A-21 58 084 werden Farbstoffpräparationen insbesondere zum Textilfarben beschrieben, die sehr hohe Mengen an Hilfsmitteln, insbesondere 50 bis 200 Gew.-%, bezogen auf den Farbstoff, eines Polyethylenglykols mit einem Molekulargewicht von 1.000 bis 40.000 enthalten.

Die Erfindung betrifft ein Verfahren zur Herstellung von in Kunststoffen leicht löslichen, lagerstabilen und staubarmen Farbstoffgranulaten mit einem Farbstoffanteil von 95 - 99 Gew.-%, dadurch gekennzeichnet, daß man eine Suspension des Farbstoffs, enthaltend 0,1-5 Gew.-%, bezogen auf Trockenfarbstoff, eines Polyglykols, das ein Molekulargewicht von 900 bis 15.000, berechnet aus der OH-Zahl, aufweist, unter Granulierung trocknet.

In einer bevorzugten Ausführungsform hat das Polyglykol ein Molekulargewicht von 5.000 -8.000, berechnet aus der OH-Zahl. In einer weiteren bevorzugten Ausführungsform ist das Polyglykol ein Copolymerisat aus Propylenoxid und Ethylenoxid. In einer weiteren bevorzugten Ausführungsform ist das Polyglykol ein Copolymerisat aus Propylenoxid und Ethylenoxid mit einer mittleren molaren Masse, berechnet aus der OH-Zahl, zwischen 2.000 und 10.000. In einer weitern bevorzugten Ausführungsform ist die Masse des Polyglykols, bezogen auf den Trockenfarbstoff 1 - 3 %. In einer weiteren bevorzugten Ausführungsform ist zusätzlich zu dem Polyglykol Polyacrylsäure und/oder deren Salze, insbesondere Natriumsalze, inbesondere bis zu 2 %, bezogen auf den Trockengehalt des Farbstoffes, enthalten. In einer weiteren bevorzugten Ausführungsform ist als Zerstäubungsorgan bei der Granulierung eine Rotationsscheibe oder Druckdüse anzuwenden.

In einer bevorzugten Ausführungsform handelt es sich bei der Farbstoff-Suspension um eine wäßrige Suspension. In einer weiteren bevorzugten Ausführungsform erfolgt die Granulierung unter Sprühtrocknung. Als Zerstäubungsorgan wird vorteilhafterweise eine Rotationsscheibe oder eine Druckdüse wie in Chemiker Ztg./Chem. Apparatur/Verfahrenstechnik, 93. Jahrgang (1969) Nr. 13 beschrieben, verwendet. In einer weiteren bevorzugten Ausführungsform, wird das Feingut mittels eines Ringkanals oder außerhalb des Trockners, z.B. in einem nachgeschalteten Fließbett gesichtet. Das granulierte Feingut kann nach Verflüssigung wieder granuliert werden. In einer weiteren bevorzugten Ausführungsform wird der wäßrige Preßkuchen des Farbstoffs im Wasser verrührt. Nach dem Verrühren und Homogenisieren erfolgt dann eine Naßmahlung, z.B. in einer Rotor-Stator-Mühle und/oder Perlmühle. Die so entstandene Dispersion mit einer Teilchengröße zwischen 1 bis 50 µm wird dann in einem Zerstäubungstrockner, vorzugsweise Druckdüsenturm, zu einem Microgranulat sprühgetrocknet.

Die Eingangs- bzw. Ausgangstemperaturen richten sich dabei, neben der erforderlichen Restfeuchte ≤ 0,5 %, nach den sicherheitstechnischen Maßnahmen. Bei diesem Verfahren erhält man ein Microgranulat zwischen 50 bis 300 µm, das im Gegensatz zum Pulver staubarm und frei fließend ist. Das Granulat ist lagerstabil, d.h. die Granulate werden durch die Beanspruchung z.B. beim Transport nicht zerstört. Wird dagegen ohne den erfindungsgemäßen Zusatz sprühgetrocknet, ist die Stabilität der Microgranulate nicht gegeben, sie zerfallen und sind nicht mehr staubarm und die Rieselfähigkeit läßt stark nach.

Die Wahl des Farbstoffs hängt im wesentlichen von dem jeweiligen Verwendungszweck der Präparationen ab. Grundsätzlich kommen alle üblichen wasserunlöslichen Farbstoffe der verschiedensten chemischen Klassen in Frage, incl. Weißtöner z.B.
- Styrol
- Pyrazolon
- Chinophtalon
- Naphthazin
- Perinon
- Anthrachinon
- Cumarin
- Thioxanthal
- Thioindigo
- Monoazo
- Disazo

Die Teilchengrößen der Microgranulate können in weiten Bereichen variieren und betragen im allgemeinen 5 bis 800 µm sowie vorzugsweise 50 bis 300 µm.

Bei der Herstellung der Microgranulate geht man im allgemeinen zweckmäßigerweise so vor, daß man den Farbstoffpreßkuchen zunächst diskontinuierlich mit dem Hilfsmittel in einem Rührkessel intensiv vermischt und gegebenenfalls erwärmt, wobei die Temperatur und Feststoffgehalt so gewählt werden, daß sich die entstandene Dispersion des Farbstoffs gut zerstäuben läßt. Die Verdüsung kann durch Wahl eines geeigneten Zerstäuberorganes so durchgeführt werden, daß die Teilchendurchmesser der entstandenen kugelförmigen Granulate in den bevorzugten Bereichen liegen. Den bevorzugten Bereich 40 bis 800 µm erhält man durch Versprühen mit Einstoffdüsen bei Drücken bis zu 100 bar.

Die erfindungsgemäß erhältlichen Zubereitungen sind staubarm und rieselfähig.

Für die nach dem neuen Verfahren hergestellten Granulate bieten sich mannigfaltige Einsatzmöglichkeiten an: Sie eignen sich zum Beispiel für das Anfärben von Kunststoffen.

Besonders geeignete Kunststoffe sind ABS, Polycarbonat, Butylstyrole, Polyester, Polystyrole und Polyamide sowie Blends aus den o.g. Kunststoffen.

Die Färbung der Kunststoffe mit den erfindungsgemäß hergestellten Farbstoffgranulaten erfolgt vorzugsweise in Masse, wie z.B. in Coloring of Plastics, John Wiley and Sons, New York, 1979, beschrieben.

Die Qualität der Granulate läßt sich steigern indem eine Sichtung, wie sie z.B. im US-A 4 198 264 beschrieben wird, durchgeführt wird. Das Feingut kann wieder verrührt und sprühgetrocknet werden.

Das beschriebene Verfahren hat gegenüber der Trocknung im Schaufeltrockner und Mahlung den Vorteil, daß es bei der Herstellung zu deutlich weniger Staubbelästigung kommt, da vom Anschlagen bis zum sprühgetrockneten Granulat in wässriger Phase gearbeitet wird, ferner entfällt die Trockenmahlung mit den bekannten Verlusten, so daß das beschriebene Verfahren zu deutlich höherer Ausbeute führt.

### Beispiel 1

2 Teile eines Copolymerisates aus Propylenoxid und Ethylenoxid mit einer mittleren molaren Masse - berechnet aus OH-Zahl, von ca. 6.500 g/Mol werden mit 322,5 Teilen eines wässrigen Preßkuchens des Farbstoffes der Formel 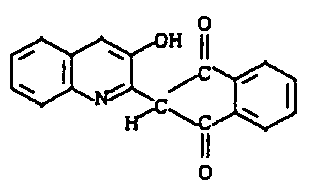 bei Raumtemperatur mit 675,5 Teilen Wasser unter starkem Rühren gemischt. Der Preßkuchen hat einen Feststoffgehalt von 61,4 %. Nach ca. 30 Minuten Rührzeit wird diese ca. 20 %ige Dispersion in einer Perlmühle mit Perlen der Größe 2 mm in einem Durchgang gemahlen. Die Dispersion hat danach einen mittleren Teilchendurchmesser von ca. 30 µm. Diese Dispersion wird dann unter ständigem Rühren der Vorlage in einem Druckdüsenturm zu einem Microgranulat, bei einer Eingangstemperatur von 180°C und einer Ausgangstemperatur von 85°C, sprühgetrocknet. Das erhaltene Microgranulat hat einen mittleren Korndurchmesser von ca. 250 µm, die Restfeuchte beträgt 0,3 %. Das Granulat ist rieselfähig und staubarm.

### Beispiel 2

1,8 Teile eines Copolymerisates aus Propylenoxid und Ethylenoxid mit einer mittleren molaren Masse von ca. 6.500 g/Mol werden mit 4,8 Teilen einer Polyacrylsäure mit einer mittleren molaren Masse von ca. 3.000 g/Mol und 461,8 Teilen eines wässrigen Preßkuchens des Farbstoffes der Formel 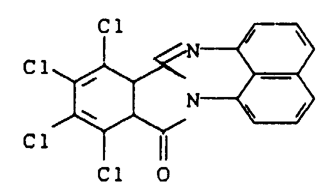 bei Raumtemperatur mit 531,9 Teilen Wasser unter starkem Rühren gemischt. Der Preßkuchen hat einen Feststoffgehalt von ca. 63,6 %. Nach ca. 30 Minuten Rührzeit wird diese ca. 30 %ige Suspension in einer Perlmühle mit Perlen der Größe 2 mm in einem Durchgang gemahlen. Der pH-Wert der Dispersion wird mit NaOH auf den pH-Wert von ca. 6 gestellt. Die Dispersion hat danach einen mittleren Teilchendurchmesser von ca. 25 µm. Diese Dispersion wird dann unter ständigem Rühren der Vorlage in einem Druckdüsenturm zu einem Microgranulat, bei einer Eingangstemperatur von 205°C und einer Ausgangstemperatur von 88°C, sprühgetrocknet ist rieselfähig, staubarm, die mittlere Korngröße liegt bei ca. 180 µm und die Restfeuchte bei ca. 0,1 %.

### Beispiel 3

Entsprechend dem Beispiel 1 und 2 sind auch folgende Farbstoffe formiert und zum Microgranulat sprühgetrocknet:

### 3.1 Orange

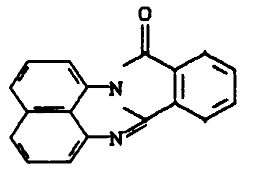

### 3.2 Grün

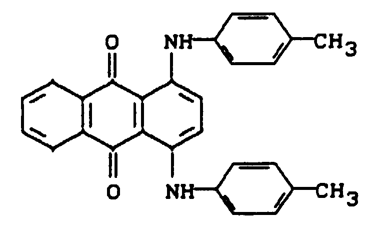

### 3.3 Grün

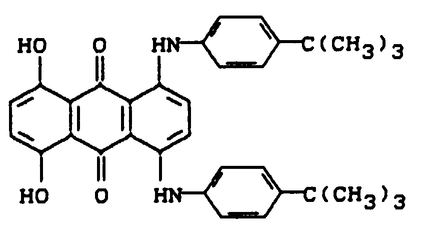

### 3.4 Orange

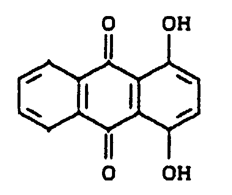

### 3.5 Rot

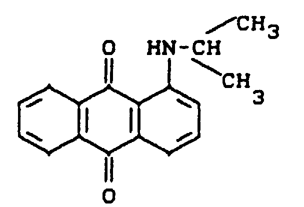

### 3.6 Rot

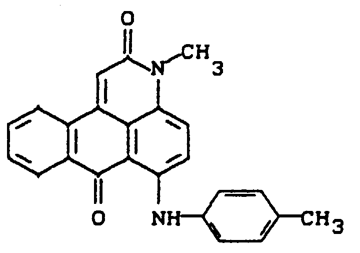

### 3.7 Rot

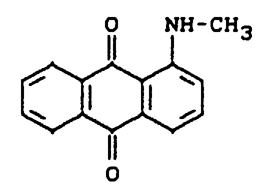

### 3.8 Violett

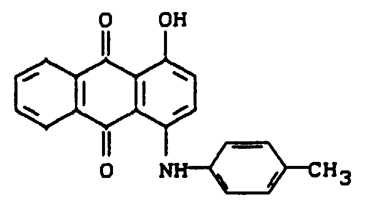

### 3.9 Violett

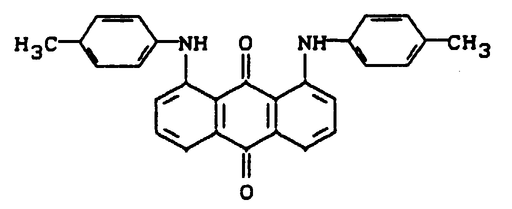

### 3.10 Gelb

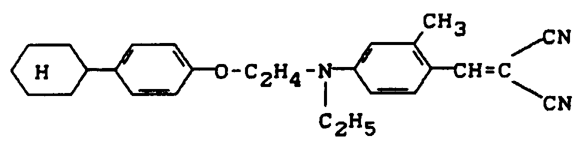

## Patentansprüche

1. Verfahren zur Herstellung von in Kunststoffen leicht löslichen, lagerstabilen und staubarmen Farbstoffgranulaten mit einem Farbstoffanteil von 95 bis 99 Gew.-%, dadurch gekennzeichnet, daß man eine Suspension des Farbstoffs, die 0,1 bis 5 Gew.-%, bezogen auf Trockenfarbstoff, eines Polyglykols, das ein Molekulargewicht von 900 bis 15.000, berechnet aus der OH-Zahl, aufweist, enthält, unter Granulierung trocknet.

2. Verfahren nach Anspruch 1, dadurch gekennzeichnet, daß eine wässrige Suspension des Farbstoffs verwendet wird.

3. Verfahren nach wenigstens einem der vorhergehenden Ansprüche, dadurch gekennzeichnet, daß die Granulierung unter Sprühtrocknung erfolgt.

4. Verfahren nach wenigstens einem der vorhergehenden Ansprüche, dadurch gekennzeichnet, daß das Polyglykol ein Copolymerisat aus Propylenoxid und Ethylenoxid ist.

5. Verfahren nach wenigstens einem der vorhergehenden Ansprüche, dadurch gekennzeichnet, daß das Polyglykol ein Copolymerisat aus Propylenoxid und Ethylenoxid mit einer mittleren molaren Masse, berechnet aus der OH-Zahl, zwischen 2.000 und 10.000 ist.

6. Verfahren nach wenigstens einem der vorhergehenden Ansprüche, dadurch gekennzeichnet, daß die Masse des Polyglykols, bezogen auf den Trockenfarbstoff, max. 5 %, insbesondere 1 - 3 % beträgt.

7. Verfahren nach wenigstens einem der vorhergehenden Ansprüche, dadurch gekennzeichnet, daß zusätzlich zu dem Polyglykol Polyacrylsäure und/oder deren Salze, inbesondere bis zu 2 %, bezogen auf den Trockengehalt des Farbstoffes, enthalten ist.

8. Verfahren nach wenigstens einem der vorhergehenden Ansprüche, dadurch gekennzeichnet, daß als Zerstäubungsorgan bei der Granulierung eine Rotationsscheibe oder Druckdüse verwendet wird.

9. Verfahren zum Einfärben von Kunststoffen durch ein nach wenigstens einem der vorhergehenden Ansprüche erhaltenes Granulat, dadurch gekennzeichnet, daß man das Granulat in dem geschmolzenen oder gelösten Kunststoff löst.

## Claims

1. Process for the preparation of storage-stable, low-dusting dyestuff granules which are readily soluble in plastics and have a dyestuff content of 95 to 99% by weight, characterised in that a suspension of the dyestuff containing 0.1 to 5% by weight, based on the dry dyestuff, of a polyglycol which has a molecular weight of 900 to 15,000, calculated from the OH number, is dried while being granulated.

2. Process according to Claim 1, characterised in that an aqueous suspension of the dyestuff is used.

3. Process according to at least one of the preceding claims, characterised in that the granulation is carried out with spray drying.

4. Process according to at least one of the preceding claims, characterised in that the polyglycol is a copolymer of propylene oxide and ethylene oxide.

5. Process according to at least one of the preceding claims, characterised in that the polyglycol is a copolymer of propylene oxide and ethylene oxide having an average molar mass, calculated from the OH number, of between 2,000 and 10,000.

6. Process according to at least one of the preceding claims, characterised in that the weight of the polyglycol, based on the dry dyestuff, is not more than 5%, in particular 1 - 3%.

7. Process according to at least one of the preceding claims, characterised in that in addition to the polyglycol, the mixture contains polyacrylic acid and/or salts thereof, in particular up to 2%, based on the dry content of the dyestuff.

8. Process according to at least one of the preceding claims, characterised in that a rotating disc or pressure jet is used as the atomising element during granulation.

9. Process for colouring plastics by granules obtained according to at least one of the preceding claims, characterised in that the granules are dissolved in the molten or dissolved plastic.

## Revendications

1. Procédé pour la préparation de granulés de colorants bien solubles dans les résines synthétiques, stables à la conservation, formant peu de poussière, à une teneur en colorant de 95 à 99% en poids, caractérisé en ce que l'on sèche avec formation de granulés une suspension du colorant contenant 0,1 à 5% en poids, par rapport au colorant sec, d'un polyglycol de poids moléculaire 900 à 15 000, calculé à partir de l'indice d'OH.

2. Procédé selon la revendication 1, caractérisé en ce que l'on utilise une suspension aqueuse du colorant.

3. Procédé selon au moins une des revendications qui précèdent, caractérisé en ce que la formation de granulés est réalisée par séchage-atomisation.

4. Procédé selon au moins une des revendications qui précèdent, caractérisé en ce que le polyglycol est un copolymère de l'oxyde de propylène et de l'oxyde d'éthylène.

5. Procédé selon au moins une des revendications qui précèdent, caractérisé en ce que le polyglycol est un copolymère de l'oxyde de propylène et de l'oxyde d'éthylène ayant une masse moléculaire moyenne, calculée à partir de l'indice d'OH, de 2 000 à 10 000.

6. Procédé selon au moins une des revendications qui précèdent, caractérisé en que la masse du polyglycol, par rapport au colorant sec, représente 5% au maximum et plus particulièrement 1 à 3%.

7. Procédé selon au moins une des revendications qui précèdent, caractérisé en ce que, en plus du polyglycol, les granulés contiennent de l'acide polyacrylique et/ou ses sels, plus spécialement en proportions allant jusqu'à 2% par rapport au colorant sec.

8. Procédé selon au moins une des revendications qui précèdent, caractérisé en ce que, pour la mise en granulés, on utilise en tant qu'organe d'atomisation un disque rotatif ou une tuyère sous pression.

9. Procédé pour colorer des résines synthétiques par des granulés obtenus selon au moins une des revendications qui précèdent, caractérisé en ce que l'on dissout les granulés dans la résine synthétique fondue ou en solution.
